# EUROPÄISCHE PATENTSCHRIFT

(11) **EP 0 974 427 B1**
(45) Veröffentlichungstag und Bekanntmachung des Hinweises auf die Patenterteilung: **25.10.2006**
(21) Anmeldenummer: 99810587.8
(22) Anmeldetag: 05.07.1999
(51) Int. Cl.: F16B 27/00, B25C 1/18, F16B 15/08

(54) **Nagelmagazin**
Magazine for nails
Magasin pour clous

(30) Priorität: 13.07.1998 DE 19831378
(43) Veröffentlichungstag der Anmeldung: 26.01.2000
(73) Patentinhaber: HILTI Aktiengesellschaft, 9494 Schaan (LI)
(72) Erfinder: Rosenbaum, Ulrich, 9470 Buchs (CH); Rohrmoser, Günter, 6812 Meiningen (AT)
(74) Vertreter: Wildi, Roland

(56) Entgegenhaltungen:
- CH-A- 588 333

## Beschreibung

Die Erfindung betrifft ein Nagelmagazin für nagelförmige Befestigungselemente gemäss dem Oberbegriff des Patentanspruchs 1.

Aus der CH-PS 588 333 ist ein Nagelmagazin für ein Setzgerät bekannt, das eine Reihe von Führungshülsen aufweist, die der Aufnahme jeweils eines nagelförmigen Befestigungselementes dienen. Zwischen jeweils zwei Führungshülsen ist ein die Führungshülsen miteinander verbindender Verbindungssteg angeordnet. Der Verbindungssteg weist einen Bereich auf, dessen parallel zur Längsachse der Führungshülse gemessene Höhe grösser ist als deren senkrecht dazu verlaufende Breite.

Dieses bekannte Nagelmagazin ist bei Setzgeräten, bei denen eine Zuführschiene in einer parallel zur Längsachse der Führungshülsen verlaufenden Ebene gebogen ausgebildet ist, nicht verwendbar, da gerade in dieser Ebene das Nagelmagazin aufgrund der grossen Höhe des Verbindungssteges eine sehr hohe Steifigkeit aufweist.

Der Erfindung liegt die Aufgabe zugrunde, ein Nagelmagazin zu schaffen, das wirtschaftlich herstellbar ist und nur in einer parallel zur Längsachse der Führungshülse verlaufenden Ebene gut biegbar ist und in einer senkrecht dazu verlaufenden Ebene eine hohe Steifigkeit aufweist.

Die Lösung dieser Aufgabe erfolgt durch ein Nagelmagazin, welches die im kennzeichnenden Abschnitt des Patentanspruchs 1 angeführten Merkmale aufweist.

Die parallel zur Längsachse der Führungshülsen verlaufende geringe und senkrecht zur Längsachse der Führungshülsen verlaufende grosse Erstreckung der Verbindungsstege verleihen dem Nagelmagazin eine gute Biegbarkeit in einer parallel zur Längsachse der Führungshülsen verlaufenden Ebene und eine hohe Steifigkeit in einer senkrecht zur Längsachse der Führungshülse verlaufenden Ebene.

Um eine Führung des Nagelmagazins in einer Führungsschiene gewährleisten zu können, weist die Führungshülse neben einem zentralen Bereich zwei radial erweiterte Endbereiche auf. Dadurch wird ein für die Biegung des Nagelmagazins notwendiger Abstand zwischen den Führungshülsen erreicht. Die Führung des Nagelmagazins erfolgt über den zentralen Bereich, der gegenüber den beiden Endbereichen eine geringere radiale Erstreckung senkrecht zur Längsachse der Führungshülsen aufweist.

Damit die Biegelinie des Nagelmagazins beim Verbiegen desselben durch den zentralen Bereich der Führungshülse verläuft, ist vorteilhafterweise der Bereich des Verbindungssteges in der Mitte, bezogen auf die Gesamtlänge der Führungshülse, angeordnet.

Um eine hohe Steifigkeit des Nagelmagazins in einer senkrecht zur Längsachse der Führungshülsen und eine gute Führung des Nagelmagazins in einer Führungsschiene erreichen zu können entspricht zweckmässigerweise die Breite jedes Verbindungssteges höchstens der grössten, senkrecht zur Längsachse der Führungshülse verlaufenden Erstreckung des zentralen Bereiches.

Über die Grösse der Verbindungsstege in ihrem Bereich kann deren Steifigkeit in zwei verschiedenen Ebenen beeinflusst werden. Zweckmässigerweise beträgt das Verhältnis zwischen der Breite und der Höhe des Verbindungssteges 1,7:1 bis 3, 7:1.

Um jeder einzelnen Führungshülse insgesamt eine hohe Steifigkeit verleihen zu können, weist vorzugsweise die Führungshülse den Verbindungssteg verstärkende Rippen auf, die sich ausgehend von den Verbindungsstegen bis in die Endbereiche der Führungshülsen erstrecken.

Damit die einzelnen Führungshülsen zueinander in einer parallel zur Längsachse der Führungshülsen erstreckenden Ebene schwenkbar sind, nimmt vorzugsweise das parallel zur Längserstreckung des Nagelmagazins erstreckende Mass der Rippen zu den Endbereichen hin ab.

Um eine einfache, reibungsarme Führung der einzelnen Führungshülsen in einem Führungsrohr eines Setzgerätes erreichen zu können, weist vorteilhafterweise jeder der beiden Endbereiche wenigstens drei parallel zur Längsachse der Führungshülse erstreckende Längsrippen auf.

Eine besonders stabile Führung der einzelnen Führungshülsen innerhalb eines Führungsrohres wird zweckmässigerweise dadurch erreicht, dass die Endbereiche wenigstens im Bereich des freien Endes der Führungshülse als umlaufender Bund ausgebildet sind.

Die Erfindung wird anhand von Zeichnungen, die ein Ausführungsbeispiel wiedergeben näher erläutert. Es zeigen:
- Fig.1: ein erfindungsgemässes Nagelmagazin ohne nagelförmige Befestigungselemente, vereinfacht dargestellt;
- Fig. 2: eine vergrösserte Darstellung des Ausschnittes II gemäss Fig. 1;
- Fig.3: eine vergrösserte Darstellung eines freien Endes des Nagelmagazines gemäss Fig. 1

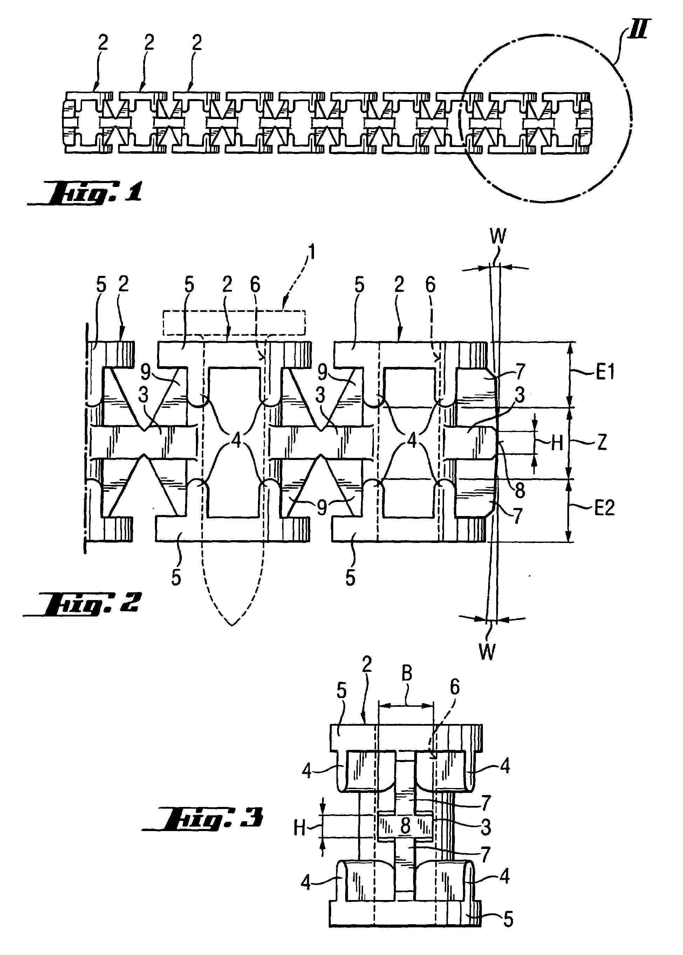

Das in den Fig. 1 bis 3 dargestellte Nagelmagazin weist mehrere Führungshülsen 2 mit jeweils einer zentralen Aufnahmebohrung 6 auf, die der Aufnahme eines nagelförmigen Befestigungselementes 1 dient. Ein schematisch dargestelltes Befestigungselement 1 offenbart die Fig. 2. Die miteinander verbundenen Führungshülsen 2 sind nebeneinander, sowie in einer Reihe angeordnet miteinander verbunden. Die Verbindung jeweils zweier Führungshülsen 2 erfolgt mit einem Verbindungssteg 3. Dieser Verbindungssteg 3 weist einen zwischen den Führungshülsen 2 liegenden Bereich 8 auf dessen parallel zur Längsachse der Führungshülse 2 gemessene Höhe H geringer ist, als dessen senkrecht zur Längsachse der Führungshülse 2 und senkrecht zur Längserstreckung des Nagelmagazins gemessene Breite B.

Die Führungshülse 2 weist neben einem zentralen Bereich Z zwei radial erweiterte Endbereiche E1, E2 auf, deren radiale Erstreckung grösser ist als die radiale Erstreckung des zentralen Bereiches Z. Der zentrale Bereich Z und jeder der beiden Endbereiche E1, E2 erstrecken sich im wesentlichen über ein Drittel der Gesamtlänge der Führungshülse 2.

Die Breite B des Verbindungssteges 3 im Bereich 8 entspricht im wesentlichen der halben senkrecht zur Längsachse der Führungshülse 2 verlaufenden Erstreckung des zentralen Bereiches Z. Die beiden Endbereiche E1, E2 sind im Bereich der freien Enden der Führungshülse 2 als umlaufender Bund 5 ausgebildet. Der an den umlaufenden Bund 5 angrenzende Bereich jedes Endbereiches E1, E2 ist von vier Längsrippen 4 gebildet. Die Aussenkontur dieser Längsrippen 4 deckt sich im wesentlichen mit der Aussenkontur des Bundes 5. Jeweils zwei Längsrippen 4 ragen auf zwei gegenüberliegenden Seiten der Führungshülse 2 senkrecht zur Längsachse der Führungshülse 2 und senkrecht zur Längserstreckung des Nagelmagazins von der Führungshülse 2 ab.

Jeder Verbindungssteg 3 einer Führungshülse 2 wird mit Rippen 9 verstärkt, die sich ausgehend von dem Verbindungssteg 3 bis in die Endbereiche E1, E2 der Führungshülsen 2 erstrecken.

Die Rippen 7 am freien Ende des Nagelmagazins erstrecken sich ausgehend von dem Verbindungssteg 3 bis zu dem Bund 5 unter einem Winkel W von 4° bezogen auf die Längsachse der Führungshülse 2.

Das Nagelmagazin ist als Kunststoffspritzteil hergestellt, wobei sämtliche Führungshülsen 2 über die Verbindungsstege 3 einstückig miteinander verbunden sind. Der Bereich 8 der Verbindungsstege 3 dient beim Setzen eines Befestigungselementes als Sollbruchstelle.

## Patentansprüche

1. Nagelmagazin mit der Aufnahme eines nagelförmigen Befestigungselementes (1) dienenden, hülsenförmigen Führungshülsen (2), die in einem Abstand nebeneinander, sowie in einer Reihe angeordnet sind, wobei jeweils zwei Führungshülsen (2) über einen, einen Bereich (8) aufweisenden Verbindungssteg (3) miteinander verbunden sind, wobei der radiale Abstand des Bereiches (8) von der Längsachse der Führungshülse (2) grösser ist als die grösste radiale Erstreckung der Führungshülse (2), **dadurch gekennzeichnet, dass** der Bereich (8) des Verbindungssteges (3) eine parallel zur Längsachse der Führungshülsen (2) gemessene Höhe (H) aufweist, die geringer ist als dessen senkrecht zur Längsachse der Führungshülsen (2) und senkrecht zur Längserstreckung des Nagelmagazins gemessene Breite (B) und dass die Führungshülsen (2) zwischen zwei Endbereichen (E1, E2) einen zentralen Bereich (Z) aufweisen, dessen radiale Erstreckung geringer ist als die radiale Erstreckung der beiden Endbereiche (E1, E2).

2. Nagelmagazin nach Anspruch 1, **dadurch gekennzeichnet, dass** der Bereich (8) in der Mitte, bezogen auf eine Gesamtlänge der Führungshülse (2) angeordnet ist.

3. Nagelmagazin nach Anspruch 1 oder 2, **dadurch gekennzeichnet, dass** die Breite (B) des Bereiches (8) höchstens der grössten senkrecht zur Längsachse der Führungshülse (2) verlaufenden Erstreckung des zentralen Bereiches (Z) entspricht.

4. Nagelmagazin nach einem der Ansprüche 1 bis 3, **dadurch gekennzeichnet, dass** das Verhältnis zwischen der Breite (B) und der Höhe (H) des Bereiches (8) 1,7:1 bis 3,7:1 beträgt.

5. Nagelmagazin nach einem der Ansprüche 1 bis 4, **dadurch gekennzeichnet, dass** die Führungshülse (2) den Verbindungssteg (3) verstärkende Rippen (7, 9) aufweist, die sich ausgehend von dem Verbindungssteg (3) bis in die Endbereiche (E1, E2) der Führungshülse (2) erstrecken.

6. Nagelmagazin nach Anspruch 5, **dadurch gekennzeichnet, dass** das parallel zur Längserstreckung des Nagelmagazins erstreckende Mass der Rippen (7, 9) zu den Endbereichen (E1, E2) hin abnimmt.

7. Nagelmagazin nach einem der Ansprüche 1 bis 6, **dadurch gekennzeichnet, dass** jeder der beiden Endbereiche (E1, E2) wenigstens drei parallel zur Längsachse der Führungshülse (2) erstreckende Längsrippen (4) aufweist.

8. Nagelmagazin nach einem der Ansprüche 1 bis 7, **dadurch gekennzeichnet, dass** die Endbereiche (E1, E2) wenigstens am freien Ende der Führungshülse (2) als umlaufender Bund (5) ausgebildet sind.

## Claims

1. Nail magazine with accommodation of a sleeveshaped guide sleeve (2) which serves a nailshaped fixing element (1), arranged at a distance alongside one another as well as in one row, and two respective guide sleeves (2) are joined together via a connecting web (3) with an area (8), and the radial distance of the area (8) from the longitudinal axis of the guide sleeve (2) is greater than the greatest extent of the guide sleeve (2), **characterised in that** the area (8) of the connecting web (3) has a height (H) as measured parallel to the longitudinal axis of the guide sleeves (2) which is less than its width (B) perpendicularly to the longitudinal axis of the guide sleeves (2) and perpendicularly to the longitudinal extent of the nail magazine, and the guide sleeves (2) have between two end areas (E1, E2) a central area (Z) the radial extent of which is less than the radial extent of both end areas (E1, E2).

2. Nail magazine according to Claim 1, **characterised in that** the area in the middle is arranged relative to an overall length of the guide sleeves (2).

3. Nail magazine according to Claim 1 or 2, **characterised in that** the width (B) of the area (3) corresponds at the most with the greatest extent of a central area (Z) extending perpendicularly to the longitudinal axis of the guide sleeve (2).

4. Nail magazine according to one of Claims 1 to 3, **characterised in that** the ratio between the width (B) and the height (H) of the area (8) lies between 1.7:1 and 3.7:1.

5. Nail magazine according to one of Claims 1 to 4, **characterised in that** the guide sleeve (2) has webs (7, 9) which reinforce the connecting web (3), starting from connecting web (3) up into the end areas (E1. E2) of the guide sleeve (2).

6. Nail magazine according to Claim 5, **characterised in that** the mass of webs (7, 9) extending parallel to the longitudinal extent of the nail magazine reduces towards the end areas (E1, E2).

7. Nail magazine according to one of Claims 1 to 6, **characterised in that** each of the two end areas (E1, E2) comprises at least three longitudinal webs (4) which extend parallel to the longitudinal axis of the guide sleeve (2).

8. Nail magazine according to one of Claims 1 to 7, **characterised in that** the end areas (E1, E2) are at least at the free end of the guide sleeve (2) designed as peripheralcluster.

## Revendications

1. Magasin à clous avec des manchons de guidage en forme de manchons (2) qui servent à recevoir un élément de fixation en forme de clou (1) et qui sont disposés à distance les uns des autres et en ligne, deux manchons de guidage (2) étant à chaque fois reliés entre eux par l'intermédiaire d'une barrette de liaison (3) comportant une zone (8), la distance radiale de la zone (8) à l'axe longitudinal du manchon de guidage (2) étant supérieure à l'extension radiale maximale du manchon de guidage (2), **caractérisé en ce que** la zone (8) de la barrette de liaison (3) possède une hauteur (H) qui est mesurée parallèlement à l'axe longitudinal des manchons de guidage (2) et qui est inférieure à sa largeur (B) mesurée perpendiculairement à l'axe longitudinal des manchons de guidage (2) et perpendiculairement à l'extension longitudinale du magasin à clous, et **en ce que** les manchons de guidage (2) comportent, entre deux zones d'extrémité (E1, E2), une zone centrale (Z) dont l'extension radiale est inférieure à l'extension radiale des deux zones d'extrémité (E1, E2).

2. Magasin à clous selon la revendication 1, **caractérisé en ce que** la zone (8) est disposée au milieu par rapport à une longueur totale du manchon de guidage (2) .

3. Magasin à clous selon la revendication 1 ou 2, **caractérisé en ce que** la largeur (B) de la zone (8) correspond au plus à l'extension maximale de la zone centrale (Z) perpendiculairement à l'axe longitudinal du manchon de guidage (2).

4. Magasin à clous selon une des revendications 1 à 3, **caractérisé en ce que** le rapport entre la largeur (B) et la hauteur (H) de la zone (8) va de 1,7:1 à 3,7:1.

5. Magasin à clous selon une des revendications 1 à 4, **caractérisé en ce que** le manchon de guidage (2) comporte des nervures (7, 9) qui renforcent la barrette de liaison (3) et qui, à partir de la barrette de liaison (3), s'étendent jusqu'aux zones d'extrémité (E1, E2) du manchon de guidage (2).

6. Magasin à clous selon la revendication 5, **caractérisé en ce que** la dimension des nervures (7, 9) parallèlement à l'extension longitudinale du magasin à clous diminue vers les zones d'extrémité (E1, E2).

7. Magasin à clous selon une des revendications 1 à 6, **caractérisé en ce que** chacune des deux zones d'extrémité (E1, E2) comporte au moins trois nervures longitudinales (4) s'étendant parallèlement à l'axe longitudinal du manchon de guidage (2).

8. Magasin à clous selon une des revendications 1 à 7, **caractérisé en ce que**, au moins à l'extrémité libre du manchon de guidage (2), les zones d'extrémité (E1, E2) sont conformées en collet périphérique (5).
